# EUROPEAN PATENT APPLICATION

(11) **EP 3 170 402 A1**
(43) Date of publication of application: **24.05.2017**
(21) Application number: 15195090.4
(22) Date of filing: 18.11.2015
(51) Int. Cl.: A23L 3/3508, A23C 9/12

(54) **PRESERVATIVE SYSTEM AND USE THEREOF IN EDIBLE PRODUCTS**

(71) Applicant: Purac Biochem B.V., 4206 AC Gorinchem (NL)
(72) Inventor: Houwelingen-de Jong, Dirkje, 4206 AC Gorinchem (NL); Louvet - van Eijk, Marielle, 4206 AC Gorinchem (NL); Lommerse, Gijsbertus Theodorus Cornelis Antonius, 4206 AC Gorinchem (NL)
(74) Representative: Nederlandsch Octrooibureau

(57) **Abstract**

The present invention concerns the field of food preservation. The present invention provides a preservative (antimicrobial) system comprising a cinnamate component and a lactate component. The invention also provides a method of preparing an edible product, said method comprising the step of adding a combination of a cinnamate component and a lactate component. Furthermore, the invention provides a method of manufacturing a fermented edible product, said method comprising fermenting an aqueous substrate using lactic acid bacteria to produce a fermented substrate, and adding a cinnamate component to the fermented substrate to inactivate lactic acid bacteria.

## Description

### Field of the invention

The present invention concerns the field of food preservation. The present invention provides a preservative (antimicrobial) system comprising:
- a cinnamate component selected from cinnamic acid, salts of cinnamic acid and combinations thereof; and
- a lactate component selected from lactic acid, salts of lactic acid and combinations thereof

The invention also provides a method of preparing an edible product, said method comprising the step of adding a combination of a cinnamate component and a lactate component.

Furthermore, the invention provides a method of manufacturing a fermented edible product, said method comprising fermenting an aqueous substrate using lactic acid bacteria to produce a fermented substrate, and adding a cinnamate component to the fermented substrate to inactivate lactic acid bacteria.

### Background of the invention

Microbial contamination of edible products, both of solid foods and consumable liquids, is a significant and universal problem. Contamination may occur at any point in the food supply line, from the source of the foodstuffs, introduced during gathering, transportation and marketing, at the point of food processing, and during storage prior to its consumption.

There is a constant need for effective means of reducing or inactivating microbial contaminants to acceptable levels without initiating changes in the foodstuffs that render them unpalatable and/or unmarketable. Antimicrobials should be safe for consumption, cost-effective, long-lasting in effectiveness, and effective in reducing the viability of a wide-range of possible contaminants.

The source of microbial contamination can be yeasts, bacteria and/or moulds. For obvious reasons, a primary concern of manufacturers of edible products is prevention of contamination with pathogenic micro-organisms, such as *Salmonella*, *Clostridium perfringens, Campylobacter*, *Staphylococcus aureus* and *Listeria monocytogenes.* However, also contamination with non-pathogenic micro-organisms is a constant concern of many food manufacturers as the shelf-life of many foods and beverages is determined by the occurrence of microbial growth.

It is well-known to preserve edible products by incorporating an antimicrobial composition.

WO 2011/029554 describes compositions for prevention against spoilage by moulds and yeasts comprising, as the only antimycotic agents, (a) at least one compound of the group consisting of caprylic acid, cinnamic acid, propionic acid, butyric acid, lactic acid, tartaric acid and fumaric acid, and salts thereof; and (b) plant or fruit extracts, the oily phases of plant or fruit extracts, and monosubstances derived from such extracts or oily phases thereof.

WO 2013/058650 describes a preservative system comprising (i) propionic acid or a salt thereof, in combination with (ii) vanillin or a derivative thereof, and (iii) cinnamic acid or a salts or a derivative thereof.

WO 2013/058651 describes a preservative system comprising (i) vanillin and derivatives thereof in combination with (ii) cinnamic acid and salts and derivatives thereof.

US 2015/0140186 describes a preservative system comprising i) propionic acid or a salt thereof and ii) nisin. The patent examples describe a preservative system that contains propionic acid, nisin and potassium cinnamate.

Silva et al. (Effects of salts of organic acids on the survival of Listeria monocytogenes in soft cheeses, International Journal of Food Science & Technology (2012), 1-7) describe a study to determine the effect of sodium lactate and sodium propionate, both in combination with sodium acetate, on strains of *Listeria monocytogenes* in artificially inoculated soft cheeses. Minas Frescal and Coalho cheeses, inoculated with a mix of *L. monocytogenes* 1/2a and Scott A, underwent two treatments: 2% (w/v) sodium lactate in combination with 0.25% (w/v) sodium acetate and 2% (w/v) sodium propionate in combination with 0.25% (w/v) sodium acetate. The growth of the pathogen was inhibited in cheeses containing the salts of organic acids, and the effects of treatment were statistically significant (P < 0.05).

KR 20110118059 describes a method for controlling pathogenic bacteria or spores in food, said method comprising immersing a food to be sterilised in a composition containing (i) a naturally derived antibacterial substance including carvacrol, thymol, eugenol, nisin, diacetyl and cinnamic acid and (ii) acetic acid; and heating the food at 60-80°C for 10-120 minutes.

### Summary of the invention

The inventors have developed a preservative system comprising a cinnamate component as well as a lactate component. This combination was found particularly effective in reducing or preventing outgrowth of various food spoilage bacteria, in particular lactic acid bacteria. Outgrowth of lactic acid bacteria is of particular concern to, for instance, refrigerated products such as meat products, bakery products (baked goods) and dairy products.

The present invention further provides a method of preparing an edible product, said method comprising the step of adding a combination cinnamate component and lactate component.

Furthermore, the invention concerns a method of manufacturing a fermented edible product, said method comprising fermenting an aqueous substrate using lactic acid bacteria to produce a fermented substrate, and adding a cinnamate component to the fermented substrate to inactivate lactic acid bacteria, said cinnamate component being selected from cinnamic acid, salts of cinnamic acid and combinations thereof.

### Detailed description of the invention

A first aspect of the present invention relates to a preservative system comprising:
- a cinnamate component selected from cinnamic acid, salts of cinnamic acid and combinations thereof;
- a lactate component selected from lactic acid, salts of lactic acid and combinations thereof.

The preservative system thus comprises cinnamic acid and/or one or more salts thereof, collectively referred to herein as the 'cinnamate component' (abbreviated as 'CC'). Cinnamic acid (3-phenyl-2-propenoic acid) is a well-known food ingredient which obtained FEMA-GRAS status in 1965. In a particularly preferred embodiment of the invention the preservative system comprises a cinnamate component selected from cinnamic acid, sodium cinnamate, potassium cinnamate and combinations thereof. In a preferred embodiment, the preservative system comprises potassium cinnamate.

The preservative system furthermore, comprise a component selected from lactic acid, salts thereof and mixtures, collectively referred to herein as the 'lactate component' (abbreviated as 'LC'). In an embodiment the preservative system comprises, a lactate component selected from the group consisting of lactic acid, sodium lactate, calcium lactate, potassium lactate and combinations thereof.

In an embodiment of the invention, the preservative system comprises the lactate component in the form of a fermentation product, such as a non-neutralized, partly neutralized or completely neutralized lactic acid ferment. Fermentation products, in accordance with the invention, typically are crude or partially purified/clarified ferments. Such fermentation products have favorable organoleptic profiles, which contribute positively to the taste and flavour characteristics of food products to which they are added. Moreover, such fermentation products will provide additional benefits with regard to labeling and regulatory aspects. Fermentation products, in accordance with the invention are obtainable by fermentation of a fermentable substrate with a suitable microorganism, in this case a lactic acid producing microorganism, resulting in a composition typically comprising, besides the lactic acid component, traces of the fermentable substrate, other substances produced by the microorganism, and traces of the microorganism itself, e.g. cellular debris and/or cellular components. The lactic acid producing micro-organisms may also produce other preservative compounds such as nisin or other bacteriocins, acetic acid, succinic acid, etc. As such, a liquid fermentation product is distinguishable from e.g. highly purified products. The term however does not exclude products which have been subjected to some form of purification/clarification and/or concentration.

In one embodiment, the fermentation product is the supernatant obtainable by fermentation of a fermentable substrate with a lactic acid producing microorganism followed by separating supernatant from (wet) biomass and other solid particles.

In one embodiment of the invention, the fermentation product is a concentrated supernatant obtainable by fermentation of a fermentable substrate with a lactic acid producing microorganism followed by separating supernatant from (wet) biomass and other solid particles and concentrating the supernatant.

In one embodiment of the invention the fermentation product is a partially purified and optionally concentrated supernatant obtainable by fermentation of a fermentable substrate with a lactic acid producing microorganism followed by separation of supernatant from (wet) biomass and other solid particles, purification of the supernatant and, optionally, concentration of the supernatant, with the proviso that the purification does not result in a level of the lactate component of more than 97 wt.% on a dry solids weight basis, preferably it does not result in a level of the lactate component of more than 96 wt.% on a dry solids weight basis, most preferably it does not result in a level of the lactate component of more than 95 wt.% on a dry solids weight basis.

As will be clear to those skilled in the art, the fermentation product comprises other dispersed or dissolved solids besides the lactate component. Typical examples of such other dispersed or dissolved solids include sugars, such as lactose, glucose and sucrose; other organic acids and/or salts thereof, such as citric acid, pyruvic acid, malic acid, succinic acid, formic acid and acetic acid; nitrogen containing substances, such as amino acids, peptides and proteins; nucleic acid components such as DNA and RNA fragments, nucleotides and nucleosides; cell membrane phospholipids; vitamins; trace elements; and pigments. In a preferred embodiment of the invention, the liquid fermentation product comprises at least one, at least two, at least three, at least four or at least five components selected from the group consisting of lactose, glucose, sucrose, citric acid and salts thereof, pyruvic acid and salts thereof, malic acid and salts thereof, succinic acid and salts thereof, formic acid and salts thereof, acetic acid and salts thereof, propionic acids and salts thereof, amino acids, peptides and proteins. In a preferred embodiment of the invention the liquid fermentation product comprises at least 0.5 wt.% on a dry solids weight basis, preferably at least 1 wt.%, more preferably at least 2 wt.% of one or more components selected from the group consisting of lactose, glucose, sucrose, citric acid and salts thereof, pyruvic acid and salts thereof, malic acid and salts thereof, succinic acid and salts thereof, formic acid and salts thereof, acetic acid and salts thereof, propionic acids and salts thereof, amino acids, peptides and proteins.

The cinnamate component (CC) and the lactate component (LC) are preferably present in the preservative system in a molar ratio of LC:CC within the range of 0.5-250, more preferably in a molar ratio of LC:CC within the range of 1-100 more preferably in a molar ratio LC:CC within the range of 3-50, more preferably within the range of 5-40 and most preferably in a molar ration of 6-30.

The combination of cinnamate component and lactate component typically constitutes at least 2,5 wt.% by weight of the dry matter contained in the preservative composition of the invention. More preferably, said combination constitutes at least 5 wt.%, at least 10 wt.%, at least 15 wt.%, at least 20 wt.%, at least 25 wt.%, at least 30 wt.%, at least 40 wt.%, at least 50 wt.%, at least 60 wt.%, at least 70 wt.%, at least 80 wt.% or at least 90 wt.% by weight of the dry matter contained in the preservative composition.

The preservative system of the present invention can take any form that makes it suitable for application to or incorporation in a food product.

In one embodiment of the invention, the preservative system takes the form of a single preservative composition comprising both the cinnamate component and the lactate component, and any further optional component.

In one embodiment, such a preservative composition is in the form of a liquid or solid preparation, e.g. a liquid concentrate or a particulate solid composition, such as a powder or a granulate.

Preservative compositions of the present invention may suitably comprise one or more carrier materials. Carrier material is typically used in any amount required to provide a product that has the desired properties relating to production, storage and dosing. Examples of carrier materials that may typically be incorporated in a preservative composition according to the invention in liquid concentrate form include a diluent, such as water, ethanol, oils, propylene glycol, etc., water and/or propylene glycol being particularly preferred. Examples of carrier materials that may typically be incorporated in a preservative composition according to the invention in particulate form include maltodextrin, starch, etc.

In one embodiment of the invention, preservative compositions are in the form of a liquid concentrate, preferably an aqueous concentrate having a dry matter content of at least 5 wt.%, more preferably of at least 10 wt.%, more preferably of at least 15 wt.%. more preferably of at least 20 wt.% and most preferably of at least 25 wt.%.

In one embodiment of the invention, preservative compositions are in the form of a particulate composition, preferably in the form of a particulate composition having a water content that does not exceed 20 wt.%, more preferably it does not exceed 10 wt.%, most preferably it does not exceed 5 wt.%.

In an embodiment, a preservative system according to this invention is provided in the form of a kit-of-parts, comprising one or more containers comprising a first composition containing the cinnamate component and one or more containers comprising a second composition comprising the lactate component. The first and second compositions may be in distinct forms. For example, embodiments are envisaged wherein the first composition is in the form of a (particulate) solid and the second composition is in the form of a (concentrated) liquid. Prior to use, such first and second preservative compositions may be mixed and optionally diluted to provide the ready-to-use liquid preservative composition that can conveniently be applied to or incorporated in the food product. Embodiments are also encompassed wherein said first and second preservative compositions are both provided in liquid form or both in solid (particulate) form. In some embodiments, said first and second preservative compositions are applied to or incorporated in the food product sequentially, optionally after reconstitution or dilution. Further optional components of the preservative system, as described herein can be present in said first and/or said second composition as deemed most appropriate by those skilled in the art. Embodiments are also envisaged, wherein the kit-of-part contains one or more further containers containing one or more further compositions comprising one or more of these optional components.

In one embodiment, preservative compositions of the invention comprises the cinnamate component in an amount of more than 0.5 wt.%, based on the total weight of the preservative composition, preferably more than 1.0 wt.%, more preferably more than 1.5 wt.%, and most preferably more than 2.0 wt.%. The maximum amount of cinnamate is not particularly limited. Embodiments are envisaged, wherein the preservative compositions comprise the cinnamate component in an amount up to 10 wt.%. In case the preservative system is provided in the form of a kit-of-parts, as described in the foregoing, the first composition may comprise the cinnamate component in much higher (relative) amounts or even in substantially pure form, e.g. in amounts of 10-100 wt.%, based on the total weight of said first composition.

In one embodiment, preservative compositions of the invention comprises the lactate component in an amount of more than 2 wt.%, based on the total weight of the preservative system, preferably more than 5 wt.%, preferably more than 7.5 wt.%, preferably more than 10 wt.%. The maximum amount of lactate is not particularly limited. In some embodiments the preservative compositions comprises the lactate component in an amount of up to 80 wt.%, up to 70 wt.%, or up to 60 wt.%, based on the total weight of the composition. In case the preservative system is provided in the form of a kit-of-parts, as described in the foregoing, the second composition may comprise the lactate component in amounts of e.g. 5-80 wt.% or 10-60 Wt.%, based on the total weight of said second composition.

Besides the cinnamate component and the lactate component the preservative system may suitably include other ingredients, including ingredients that further enhance the antimicrobial properties of the preservative system.

According to a particularly preferred embodiment, the preservative system additionally comprises an alkanoate component selected from acetic acid, propionic acid, salts of acetic acid, salts of propionic acid and combinations thereof, collectively referred to herein as the 'alkanoate component' (abbreviated as 'ALC').

In an embodiment, the preservative system comprises an alkanoate component selected from the group consisting of acetic acid and/or one or more acetic acid salts. The preservative system preferably comprises an alkanoate component selected from the group consisting of acetic acid, sodium acetate, potassium acetate, calcium acetate and combinations thereof, most preferably acetic acid, sodium acetate, potassium acetate and combinations thereof. Acetic acids and salts thereof are collectively referred to herein as 'acetate' (or 'acetate component' (abbreviated as 'AC')). In one preferred embodiment of the invention, the preservative combination comprises acetate in the form of a non-neutralized, partly neutralized or completely neutralized vinegar. The term vinegar is used to denote the liquid obtained by the acetous fermentation of an alcoholic liquid, containing at least 4 grams of acetic acid per 100 ml, in particular a vinegar that can be declared 'natural', e.g. in terms of the FDA guidelines. According to said guidelines "natural" means minimally processed and containing no synthetic ingredients or processing aids (cf. Food Labeling: Nutrient Content Claims General Principles, Petitions, Definitions of Terms, 56 Fed. Reg. at 60,466). In a preferred embodiment the preservative system comprises a non-neutralized, partly neutralized or completely neutralized vinegar selected from the group consisting of white vinegar, brandy vinegar, alcoholic vinegar, balsamic vinegar, wine vinegar, malt vinegar, beer vinegar, potato vinegar, rice vinegar, apple vinegar, cherry vinegar, and cane vinegar. In a particularly preferred embodiment of the invention, the vinegar is cane vinegar. In a preferred embodiment of the invention, the acetic acid content of the vinegar is at least 5 % (w/w), more preferably at least 7.5 % (w/w), even more preferably at least 10 % (w/w). It is also possible to make use of vinegar that has been pre-concentrated to a certain extent. Such products are commercially available and typically have an acetic acid content between 20 and 30 % (w/w). In a preferred embodiment of the invention, the acetic acid content of the vinegar is at least 20 % (w/w), more preferably at least 25 % (w/w), e.g. about 29 or 30 % (w/w). A common measure for indicating the acetic acid content of vinegar is the grain strength. The grain strength is the acetic acid content expressed in g/l, so 50 grain vinegar is about 5% (w/w) acetic acid. As will be appreciated by those skilled in the art, it is preferred that the vinegar is at least 200 grain, more preferably at least 250 grain. Often, commercial food-grade vinegars are offered at 200 grain and 300 grain. In one preferred embodiment of the invention, a 300 grain vinegar is used.

In an embodiment, the preservative system comprises an alkanoate component selected from the group consisting of propionic acid and/or one or more propionic acid salts. The preservative system preferably comprises an alkanoate component selected from the group consisting of propionic acid, sodium propionate, calcium propionate, potassium propionate and combinations thereof. Propionic acids and salts thereof are collectively referred to herein as 'propionate' (or 'propionate component'). Propionate can suitably be produced by fermentation. In the context of this invention, it is preferred to employ propionate obtained by fermenting glucose, lactose or lactate, particularly lactate, using an appropriate micro-organism, such as propionic acid bacteria. Hence, in a particularly preferred embodiment of the invention the preservative system comprises propionate in the form of a fermentation product, such as a non-neutralized, partly neutralized or completely neutralized propionic acid ferment. Such a fermentation product or ferment is typically characterized by the presence of other fermentation products such as acetate, lactate and/or succinate.

The cinnamate component (CC) and the alkanoate component (ALC) are preferably present in the preservative system in a molar ratio of ALC:CC within the range of 0.5-250, more preferably in a molar ratio of ALC:CC within the range of 1-100, more preferably in a molar ratio ALC:CC within the range of 2-50, more preferably in a molar ratio ALC:CC within the range of 3-40, more preferably within the range of 3.5-30, most preferably within the range of 4-20.

In one embodiment, preservative compositions of the invention comprises the alkanoate component in an amount of more than 1 wt.%, based on the total weight of the preservative system, preferably more than 2.5 wt.%, preferably more than 5 wt.%, preferably more than 7.5 wt.%. The maximum amount of acetate is not particularly limited. In some embodiments the preservative compositions comprises the alkanoate component in an amount of up to 35 wt.%, up to 25 wt.% or up to 20 wt.%. In case the preservative system is provided in the form of a kit-of-parts, as described in the foregoing, the alkanoate component may conveniently be incorporated in the second composition or, alternatively, may be provided in a separate container comprising an alkanoate containing composition, e.g. in amounts of 2.5-50 wt.% or 5-25 wt.%, based on the total weight of said compositions.

The combination of cinnamate component, lactate component and alkanoate component typically constitutes at least 2 % by weight of the dry matter contained in the preservative system or the preservative composition of the invention. More preferably, said combination constitutes at least 5 %, at least 10 %, at least 15 %, at least 20 %, at least 25 %, at least 30 %, at least 40 %, at least 50 %, at least 60 %, at least 70 %, at least 80 % or at least 90 % by weight of the dry matter contained in the preservative system or the preservative composition.

The salts of acids employed in the present preservative system are preferably selected from sodium salts, potassium salts, calcium salts and combinations thereof. More preferably, said salts are selected from sodium salts, potassium salts and combinations thereof.

In an embodiment of the invention, a further component of the preservative system is a vanillin component, which is typically selected from vanillin and vanillin derivatives. Vanillin (4-Hydroxy-3-methoxybenzaldehyde) is approved as a food additive by authorities worldwide. Vanillin was given FEMA-GRAS status in 1965. Derivatives of vanillin such as methyl vanillin, ethyl vanillin and vanillin 2,3-butanediol acetal may also suitably used in accordance with this invention, although the use of vanillin is particularly preferred.

In one embodiment, preservative compositions of the invention comprise a vanillin component in an amount of more than 0.25 wt.%, based on the total weight of the preservative composition, preferably more than 0.5 wt.%, preferably more than 0.75 wt.%, preferably more than 1.0 wt.%. The maximum amount of vanillin is not particularly limited. Embodiments are envisaged, wherein the preservative compositions comprise the vanillin component in an amount up to 5 wt.%. Embodiments are envisaged wherein the preservative system is provided in the form of a kit-of-parts, as described in the foregoing, said kit-of-parts comprising at least one container comprising a further composition containing the vanillin component in high (relative) amounts or even in substantially pure form, e.g. in amounts of 10-100 wt.%, based on the total weight of said further composition.

The preservative system of the present invention offers the advantage that the presence of other preservatives, especially synthetic preservatives such as benzoates and sorbates can be minimized or avoided altogether while achieving the desired level of antimicrobial effect. The preservative system of the present invention typically contains no or only minor amounts of additional preservative agents, such as, in particular, benzoate and/or sorbate. In a preferred embodiment of the invention the preservative compositions in accordance with the invention contain less than 1 wt% of preservative agents selected from the group consisting of sorbates and benzoates, preferably less than 0.5 wt%, preferably less than 0.1 wt.%, more preferably less than 0,05 wt.%. In a particularly preferred embodiment of the invention the preservative composition is essentially or completely free from preservative agents selected from the group of benzoates and sorbates.

Furthermore, in a preferred embodiment of the invention the preservative compositions contain less than 0.25 wt.% of lytic enzyme, such as lysozyme, preferably less than 0.10 wt.%, preferably less than 0.05 wt.%. In a particularly preferred embodiment of the invention the preservative composition is essentially or completely free from lytic enzymes, such as lysozyme.

Furthermore, in a preferred embodiment of the invention, the preservative compositions do not comprise plant or fruit extracts, the oily phases of plant or fruit extracts and monosubstances derived from such extracts or the oily phases thereof, besides the cinnamate and/or vanillin.

Another aspect of the invention relates to the use of the preservative systems and preservative compositions as defined herein before for the preservation of an edible product, especially refrigerated food products, such as meat containing products, baked (farinaceous) products and dairy products.

According to one embodiment, the preservative system is used in a farinaceous product to prevent the outgrowth of lactic acid bacteria. In accordance with another preferred embodiment, the preservative system is used in a meat product to prevent the outgrowth of both lactic acid bacteria. In accordance with another preferred embodiment, the preservative system is used in a dairy product to prevent the outgrowth of both lactic acid bacteria and *Listeria,* especially *of Listeria monocytogenes*

The present invention also provides the use of a cinnamate component to arrest lactic acid production by lactic acid bacteria in a fermented edible product. The inventors have found that cinnamate component, in the presence of a lactate component, can effectively be used to inactivate lactic acid bacteria. Thus, continued lactic acid production by lactic acid bacteria can effectively be arrested through the addition of a sufficient amount of cinnamate component.

Yet another aspect of the invention relates to a method of preparing an edible product, said method comprising introducing into the edible product:
- cinnamate component selected from cinnamic acid, salts of cinnamic acid and combinations thereof;
- a lactate component selected from lactic acid, salts of lactic acid and combinations thereof.

According to an embodiment, the present method comprises adding the cinnamate component at a level of at least 50 mg per kg of the edible product, e.g. at a level within the range of 100-3,000 mg, more preferably 200-2,000 mg, even more preferably 300-1,500 mg and most preferably 400-1250 mg, per kg of the edible product.

According to an embodiment, the present method comprises adding the lactate component at a level of at least 500 mg per kg of the edible product, e.g. at a level within the range of 1000-25,000 mg, more preferably 2,000-15,000 mg, even more preferably 2,500-12,500 mg and most preferably 3,000-10,000 mg, per kg of the edible product.

The cinnamate component (CC) and the lactate component (LC) are preferably added to the edible product in a molar ratio of LC:CC within the range of 0.5-250, more preferably in a molar ratio of LC:CC within the range of 1-100 more preferably in a molar ratio LC:CC within the range of 3-50, more preferably within the range of 5-40 and most preferably in a molar ratio of 6-30.

According to an embodiment, the present method comprises adding the alkanoate component at a level of at least 250 mg per kg of the edible product, e.g. at a level within the range of 500-12,500 mg, more preferably 1,000-7,500 mg, even more preferably 1,250-6,000 mg and most preferably 1,500-5,000 mg, per kg of the edible product.

The cinnamate component (CC) and the optional alkanoate (ALC) component are preferably added in a molar ratio of ALC:CCALC within the range of 1-100, more preferably in a molar ratio ALC:CC within the range of 2-50, more preferably in a molar ratio ALC:CC within the range of 3-40, more preferably within the range of 3.5-30, most preferably within the range of 4-20.

According to an embodiment, the present invention comprises adding the vanillin component to the edible product at a level of at least 25 mg per kg of the edible product, e.g. at a level within the range of 50-1,500 mg, more preferably 100-1000 mg, even more preferably 125-750 mg and most preferably 150-500 mg, per kg of the edible product.

In a particularly preferred embodiment of the present invention, the method comprises the introduction into the edible product of a preservative composition as defined herein before.

Typically, in an embodiment the preservative composition, as defined herein, is added in an amount of 0.25-5 wt.% by weight of the edible product. More preferably, the preservative composition is added in an amount of 0.5-3 wt.%, most preferably of 0.75-2 wt.% by weight of the edible product.

The preservative system of the invention can provide particular advantages in edible products having a water content within the range of 5-95 wt.%, more preferably within the range of 15-90 wt.%, more preferably, within the range of 25-85 wt.%,.

The preservative system of the invention can provide particular advantages in edible products having water activities (Aw) within the range of 0.75-0.999, preferably within the range of 0.85-0.99, more preferably within the range of 0.9.-0.98

The preservative system of the invention can provide particular advantages in edible products, comprising an aqueous phase, characterized by a pH within the range of 2-7, preferably within the range of 3-6.5, more preferably within the range of 4-6.25, more preferably within the range of 4.5-6.

In accordance with one advantageous embodiment, the edible product is a refrigerated edible product, meaning that it is distributed and stored under refrigeration, i.e. the food product is distributed and stored under controlled temperature conditions within the range of 0-10°C, more preferably within the range of 3-8°C. In a particularly preferred embodiment of the invention, the edible product is a packaged edible product containing instructions printed on the package to store the packaged food product in a refrigerator, preferably at a temperature within the range of 0-10°C, more preferably within the range of 3-8°C.

The edible product of the invention preferably is a perishable food product. In the art, the term 'perishable' is, typically used to denote food products that have a measurable, limited shelf life, such as fresh and refrigerated food products. Typically, in accordance with one embodiment of the invention, a perishable food product is a food product that, without addition of preservatives, has a shelf-life of not more than 2 weeks when kept at a temperature within the range of 0-10 °C.

The food product of the invention typically is a convenience food-product, i.e. a food product that can be served with only minimal processing by the consumer. In particular, the convenience food product in accordance with the present invention is a so-called 'ready-to-serve' type of food product, typically meaning that it is a food product ready for consumption by a consumer or requiring only heating, e.g. by microwaving, before consumption.

In one advantageous embodiment of the present method, the edible product is a farinaceous product containing at least 20% flour by weight of the dry matter, preferably at least 30%. Examples of farinaceous edible product encompassed by this embodiment product include flour, premix, instant batter, batter, dough, cooked batter or cooked dough. Here the term "cooked" encompasses "baked" (e.g. baked bread), "fried" (e.g. fried doughnuts), "cooked" (e.g. cooked pancakes) and boiled (e.g. boiled&baked bagles).

The application of the combination of a cinnamate component and lactate component in farinaceous products offers the important advantage that it effectively prevents growth of lactic acid bacteria without having an adverse effect on the organoleptic quality of the farinaceous product.

In another advantageous embodiment of the invention the edible product is a meat product. The combined use of cinnamate component and lactate component in meat products was found to be very effective against outgrowth of lactic acid bacteria.

In another advantageous embodiment of the invention the edible product is a dairy product. The combined use of cinnamate component and lactate component in dairy products was found to be very effective against outgrowth of both lactic acid bacteria and *Listeria.*

The benefits of this embodiment of the invention are particularly appreciated in fermented dairy products. Examples of such fermented dairy products include cheese, yoghurt, quark, etc.

Also provided is a method of manufacturing a fermented edible product, said method comprising fermenting an aqueous substrate using lactic acid bacteria to produce a fermented substrate, and adding a cinnamate component to the fermented substrate to inactivate lactic acid bacteria, said cinnamate component being selected from cinnamic acid, salts of cinnamic acid and combinations thereof.

The aqueous substrate preferably contains at least 50 wt.% water, more preferably 60-95 wt.% water and most preferably 70-90 wt.% water. According to a particularly preferred embodiment, the aqueous substrate is milk derived.

Preferably, the cinnamate component is added when the fermented substrate contains at least 10⁶ lactic acid bacteria cells per ml and/or at least 0.5 wt.% lactic acid. Even more preferably, the cinnamate component is added when the fermented substrate contains at least 10⁷ lactic acid bacteria cells per ml, most preferably at least 10⁸ lactic acid bacteria cells per ml. The lactic acid content of the fermented substrate preferably is at least 0.75 wt.%, most preferably at least 1.0 wt.% when the cinnamate component is added.

The cinnamate component is typically added to the fermented substrate at a level within the range of 100-3,000 mg, more preferably 200-2,000 mg, even more preferably 300-1,500 mg and most preferably 400-1250 mg, per kg of the fermented substrate.

The optional alkanoate component is typically added to the fermented substrate at a level of at least 250 mg per kg of the edible product, e.g. at a level within the range of 500-12,500 mg, more preferably 1,000-7,500 mg, even more preferably 1,250-6,000 mg and most preferably 1,500-5,000 mg, per kg of the fermented substrate.

A further aspect of the invention relates to an edible product as defined here above, comprising the preservative composition of the present invention.

In an embodiment of the invention, the edible product is the product obtainable by a method of the invention that comprises the introduction of a cinnamate component and a lactate component and optionally an alkanoate component. In an embodiment of the invention, the edible product is the product obtainable by a method of the invention that comprises the introduction of a cinnamate component to a fermented edible product and optionally an alkanoate component.

In an embodiment, the edible product contains the cinnamate component at a level of at least 50 mg per kg of the edible product, e.g. at a level within the range of 100-3,000 mg, more preferably 200-2,000 mg, even more preferably 300-1,500 mg and most preferably 400-1250 mg, per kg of the edible product.

In an embodiment, the edible product contains the lactate component at a level of at least 500 mg per kg of the edible product, e.g. at a level within the range of 1000-25,000 mg, more preferably 2,000-15,000 mg, even more preferably 2,500-12,500 mg and most preferably 3,000-10,000 mg, per kg of the edible product.

The cinnamate component (CC) and the lactate component (LC) are preferably present in the edible product in a molar ratio of LC:CC within the range of 0.5-250, more preferably in a molar ratio of LC:CC within the range of 1-100 more preferably in a molar ratio LC:CC within the range of 3-50, more preferably within the range of 5-40 and most preferably in a molar ratio of 6-30.

In an embodiment, the edible product contains the alkanoate component at a level of at least 250 mg per kg of the edible product, e.g. at a level within the range of 500-12,500 mg, more preferably 1,000-7,500 mg, even more preferably 1,250-6,000 mg and most preferably 1,500-5,000 mg, per kg of the edible product.

The cinnamate component (CC) and the alkanoate (ALC) component are preferably present in a molar ratio of ALC:CC within the range of 1-100, more preferably in a molar ratio ALC:CC within the range of 2-50, more preferably within the range of 3-40, even more preferably within the range of 3.5-30, most preferably within the range of 4-20.ALC

According to an embodiment, the edible product contains the vanillin component at a level of at least 25 mg per kg of the edible product, e.g. at a level within the range of 50-1,500 mg, more preferably 100-1000 mg, even more preferably 125-750 mg and most preferably 150-500 mg, per kg of the edible product. The food product obtained by the present method typically has a shelf-life within the range of 7-140 days, more preferably within the range of 10-125 days, even more preferably 12-115 days, and most preferably 14-105 days.

The invention is further illustrated by the following non-limiting examples.

### EXAMPLES

### Example 1: Bioscreening in broth

In this test, the efficiency of various antimicrobial compositions was tested in broth. The following micro-organisms, relevant for spoilage of slightly acidic products, were tested:

| **Micro-organism** |
|---|
| *Listeria monocytogenes* |
| *Leuconostoc mesenteroides* |
| *Lactobacillus plantarum* |
| *Candida norvegica* (Reiersöl) S.A. Mey & Yarrow 1978 |
| *Pichia fermentans* Lodder 1932 |
| *Yarrowia lipolytica* |
| *Sacharomyces cerevisea* |
| *Candida tropicalis* |

The micro-organisms are cultivated in optimal growth media: *Listeria* in BHI, lactic acid bacteria in MRS and the yeasts in GPY. To these media, antimicrobial compositions were added, after which the pH was adjusted to 5.8 with HCl or NaOH. The antimicrobial compositions were composed of the following components:
- Potassium sorbate, Acros Organics
- Sodium lactate, 60% w/w, PURASAL S, PURAC
- Sodium diacetate, crystal FCC food grade, Kemira
- Cinnamate Component CC: Potassium cinnamate, PuraQ Xtend AX66, PURAC
- Vanillin, Sigma
- A mixture of Lactate Component and Acetate Component LC+AC: 43% w/w Verdad N10 (Corbion Purac), comprising 60% w/w potassium lactate, 42% w/w vinegar (200 grain, Fleischmann), comprising 19% w/w acetic acid, 15% w/w KOH (50% w/w)).

The reference composition consisted of 12.2 w/w% potassium sorbate, 12.2 w/w% sodium diacetate and 75.6 w/w% sodium lactate.

The tests were carried out in bioscreen plates with a volume of 200 µl. The media were filter sterilized before inoculation. Incubation took place at 10°C at aerobic conditions. Growth of the micro-organisms was detected with OD measurements.

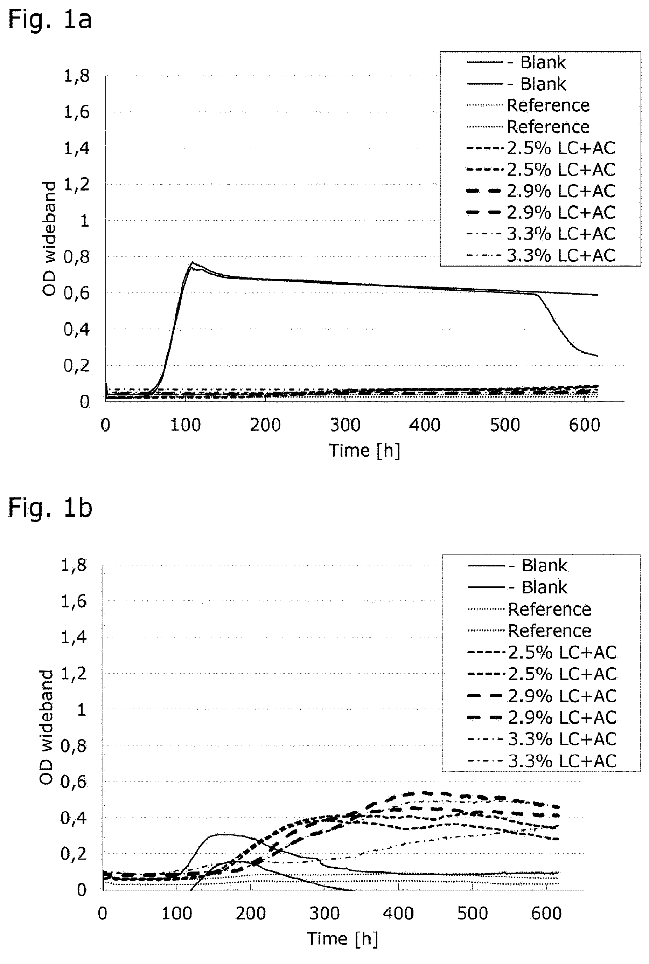

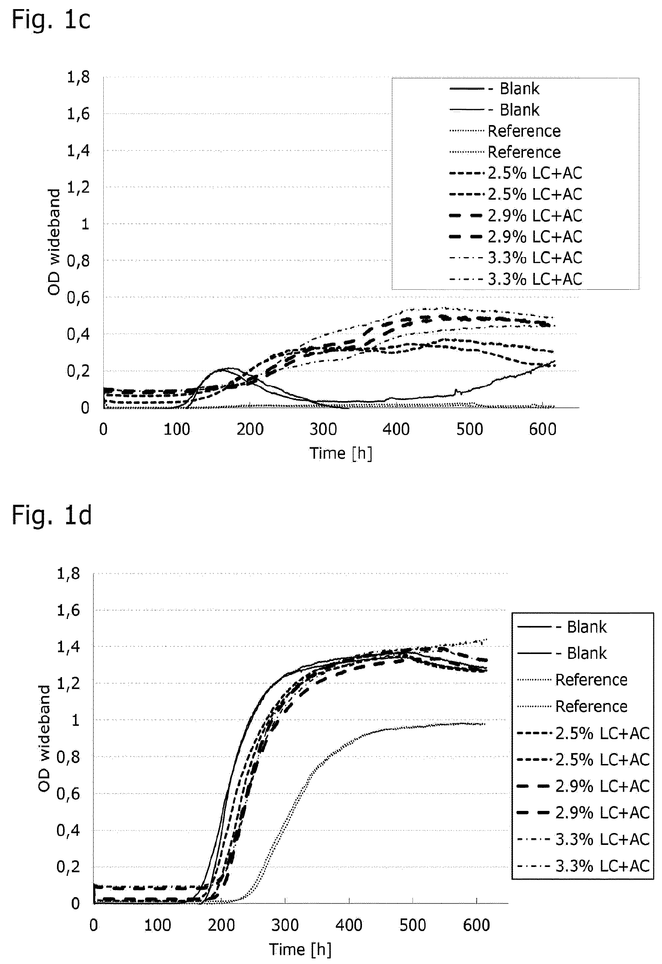

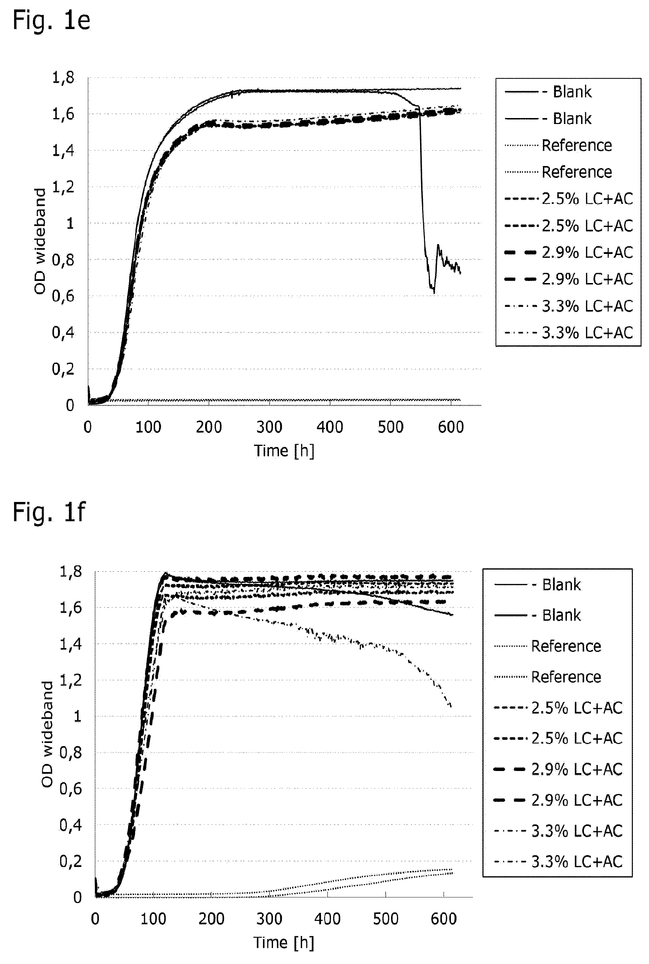

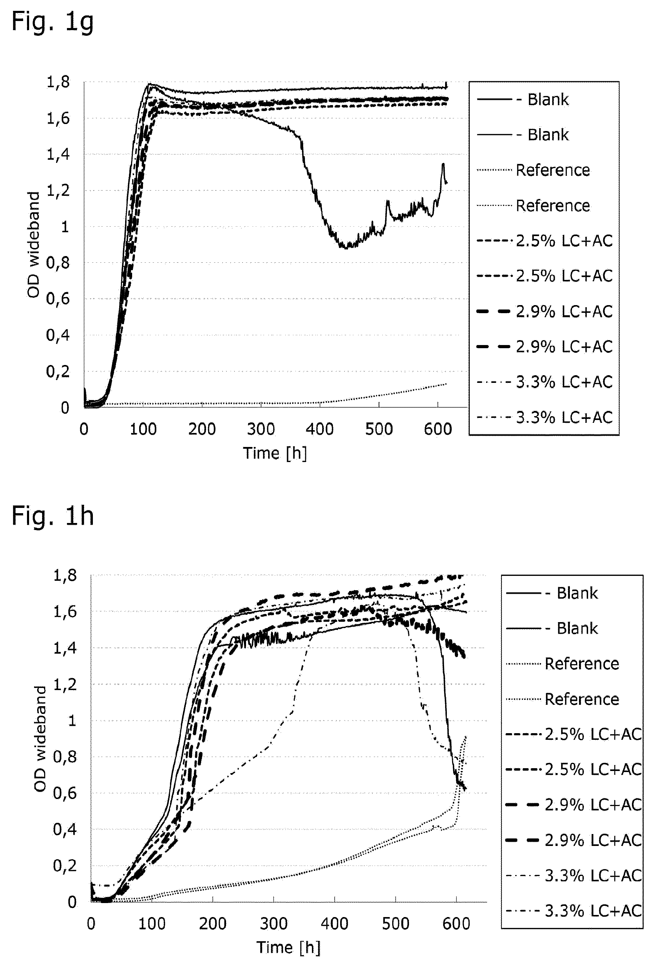

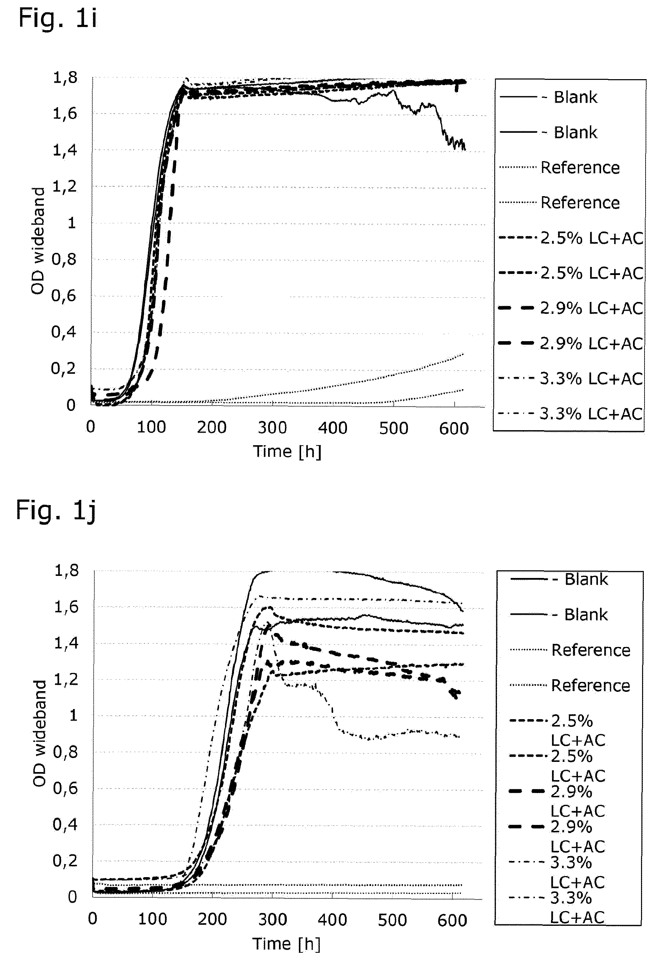

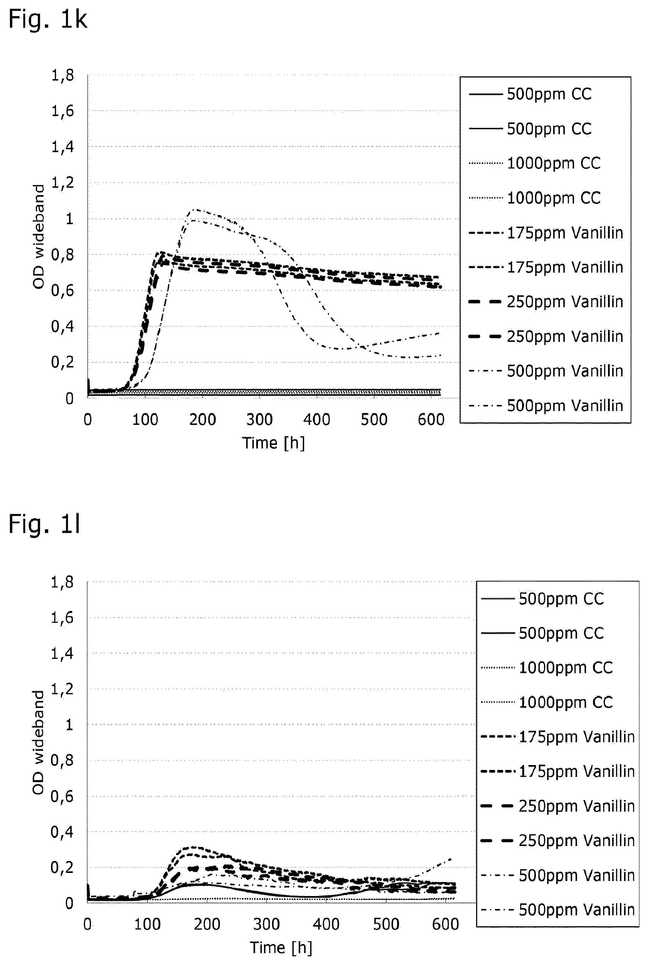

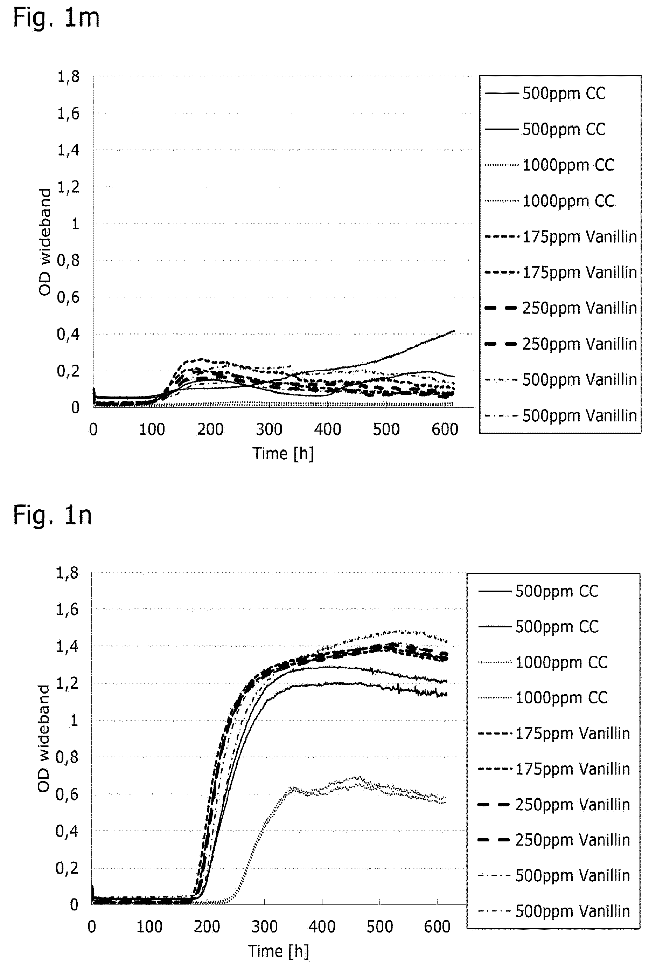

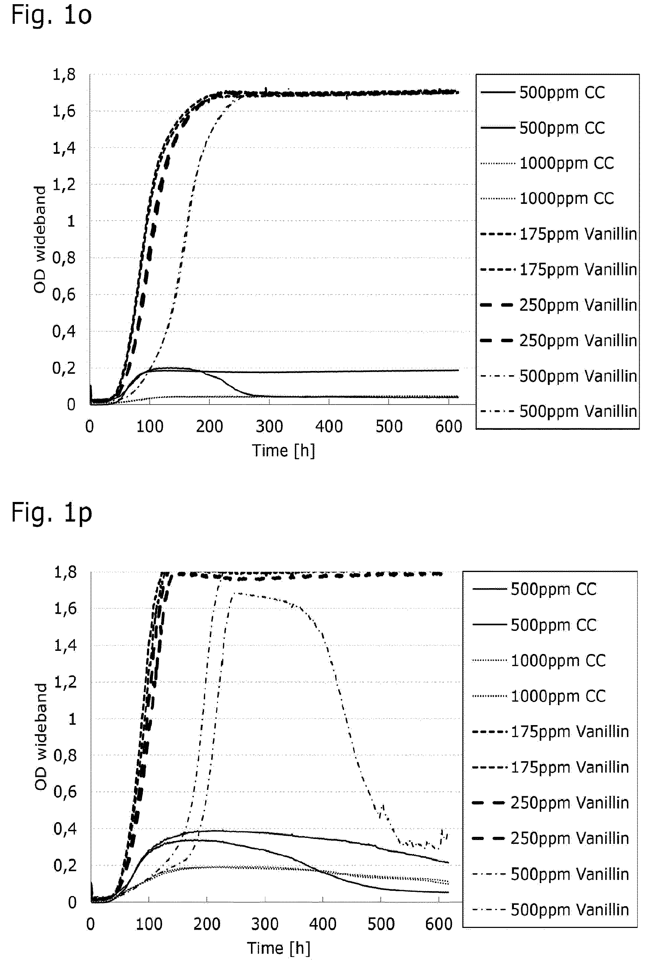

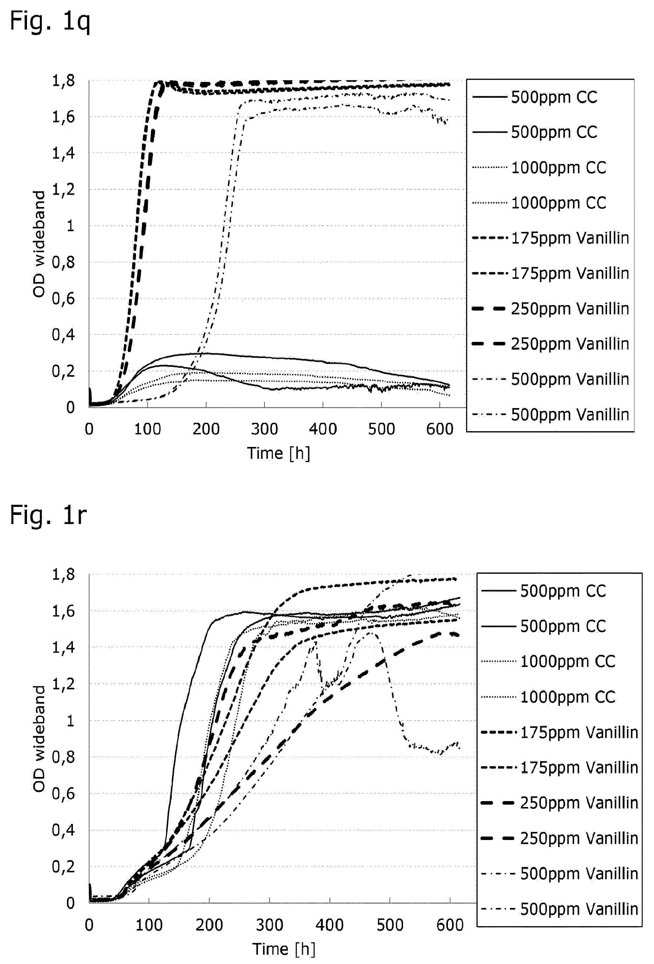

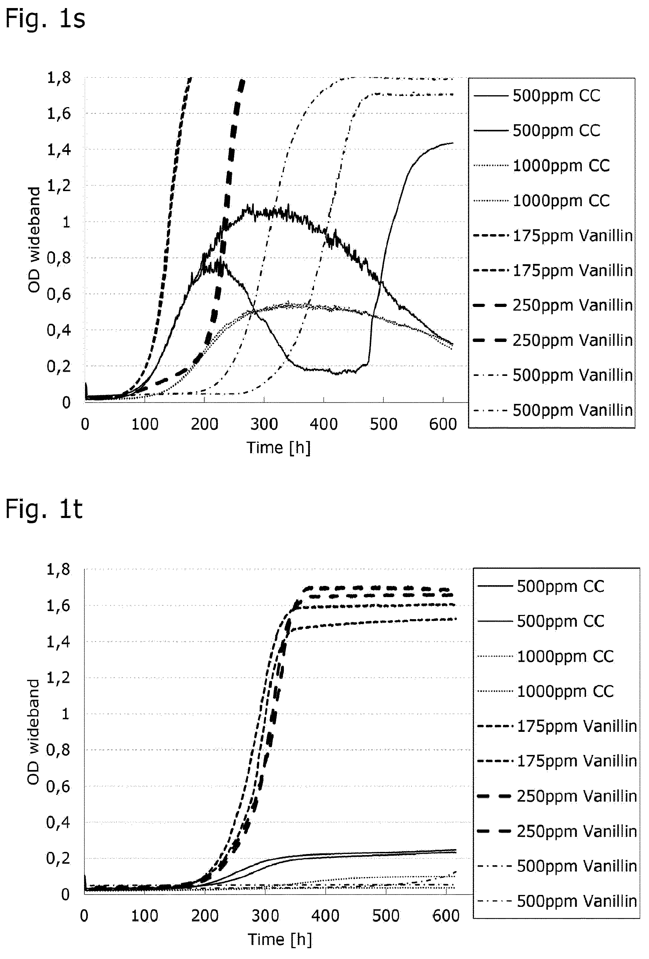

Figures 1(a-t) and 2(a-t) show the results. As can be inferred from these figures, the reference composition with sorbate was able to suppress the growth of virtually all tested micro-organisms. With respect to the experimental antimicrobial compositions, only those containing potassium cinnamate next to the potassium lactate and acetate mixture were found to be equally active. Including vanillin in the latter composition improved the antimicrobial activity even more.

### Example 2: Shelf life improvement in pancakes

A pancake batter was prepared from pancake flour (Koopmans, the Netherlands), semi-skimmed milk and eggs The following batches were prepared, comprising different preservative compositions:
1) control, no preservatives, pH of the batter set at 5.5 by adding 0.142% citric acid
2) 0.04% potassium cinnamate (CC) and 1.12% of a mixture of Lactate Component and Acetate Component LC+AC: 50.8% w/w Verdad N10 (Corbion Purac), comprising 60% w/w potassium lactate, 49.2% w/w vinegar (200 grain, Fleischmann), comprising 19% w/w acetic acid, pH of the batter set at 5.45 by adding 0.08% citric acid
3) 0.04% potassium cinnamate (CC) and 1.12% of a mixture of Lactate Component and Acetate Component LC+AC: 50.8% w/w Verdad N10 (Corbion Purac), comprising 60% w/w potassium lactate, 42% w/w vinegar (200 grain, Fleischmann), comprising 19% w/w acetic acid, pH of the batter set at 5.52 by adding 0.065% citric acid

After baking, the pancakes were packed in sealed plastic bags under controlled atmosphere (30% CO₂) and sterilized by irradiation and stored at 0°C until further use.

An inoculation culture was prepared by inoculating 9 ml MRS broth with *Leuconostoc mesenteroides* and incubating the broth for 2 days at 30°C.

After unpacking the pancakes were placed on silver foil (cleaned with alcohol). 0.7 ml of diluted inoculum was sprinkled and subsequently spread over the pancakes (target initial colony count is 10²⁻³ CFU/g). The pancakes were divided into halves, placed in a stomacher bag and stored at 4°C.

Growth of Leuconostoc mesenteroides was monitored for 32 days by means of colony counts on MRS (Oxoid, CM0361) and TSA (Oxoid, CM0131) agar plates.

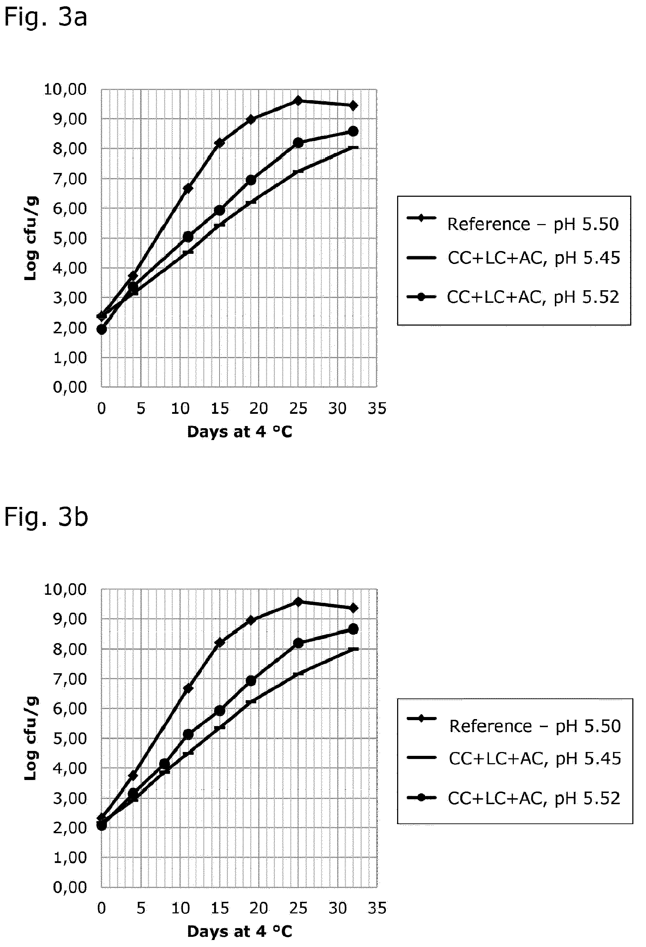

The results are shown in figures 3 (a and b). From these figures, it can clearly be inferred that a substantial increase of shelf life can be obtained with the preservative composition comprising cinnamate, lactate and acetate. Lowering the pH of the pancake batter from 5.7 to 5.6 with these compositions also contributed to a substantial increase of the shelf life.

### Example 3: Post-acidification of yoghurt

The efficiency of cinnamate as such and in combination with some other agents in the prevention of acidification of yoghurt during its shelf life was investigated. The following materials were used:
- Yoghurt (Activia, Danone The Netherlands)
- Pasteurized semi skimmed milk (FrieslandCampina, The Netherlands)
- Cinnamate Component CC: Potassium cinnamate (PuraQ Xtend AX66, Corbion Purac)
- Calcium lactate ('CaL', PURACAL PP, Corbion Purac)
- Propionate Component PC: A fermented (cane) sugar with around 25% sodium propionate (Verdad F95, Corbion Purac)
- Vanillin (Sigma)

Yoghurt was prepared by adding 2% Activia yoghurt to semi skimmed milk which was kept in a waterbath of 40 °C, while stirring at 70 rpm. pH was measured regularly. When a pH of 4.6 (after ± 7 hours) was reached, the fermentation was stopped by cooling the yoghurt to a temperature of 0 °C. The agents for preventing post-acidification were added to samples of the yoghurt, after which they were stored at 10°C (samples 2-10) or 0°C (sample 1) for three weeks while measuring pH and lactic acid bacteria count at regular time intervals. Also plain Activia yoghurt was included in the test. The samples had the following compositions:

**Table 1: test set up**

| **Sample** | **Composition** | **Storage temperature** |
|---|---|---|
| 1 | Yoghurt (control) | 0 °C |
| 2 | Yoghurt (control) | 10 °C |
| 3 | Yoghurt + 250 ppm CC | 10 °C |
| 4 | Yoghurt + 500 ppm CC | 10 °C |
| 5 | Yoghurt + 750 ppm CC | 10 °C |
| 6 | Yoghurt + 1000 ppm CC | 10 °C |
| 7 | Yoghurt + 1000 ppm CC + 1000 ppm PC + 350 ppm vanillin | 10 °C |
| 8 | Yoghurt + 500 ppm CC + 0.5% CaL | 10 °C |
| 9 | Activia yoghurt Danone (extra control) | 10°C |
| 10 | Activia yoghurt Danone + 500 ppm CC | 10 °C |

Lactic acid bacterial count was carried out by colony counts on MRS agar plates after incubation for 2 days at 30°C.

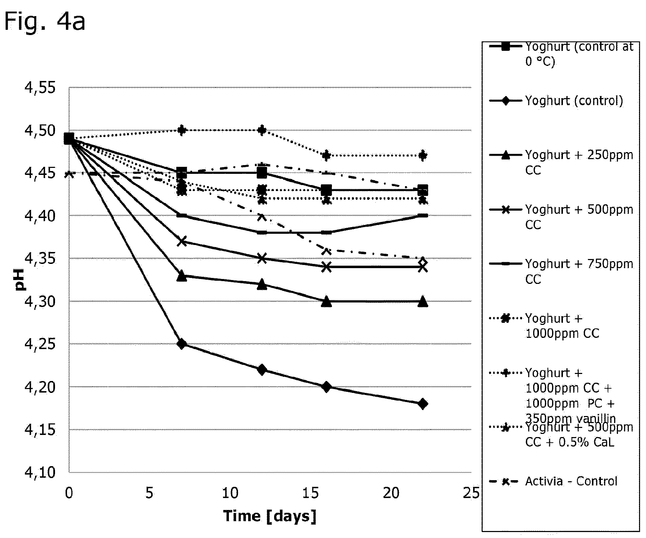

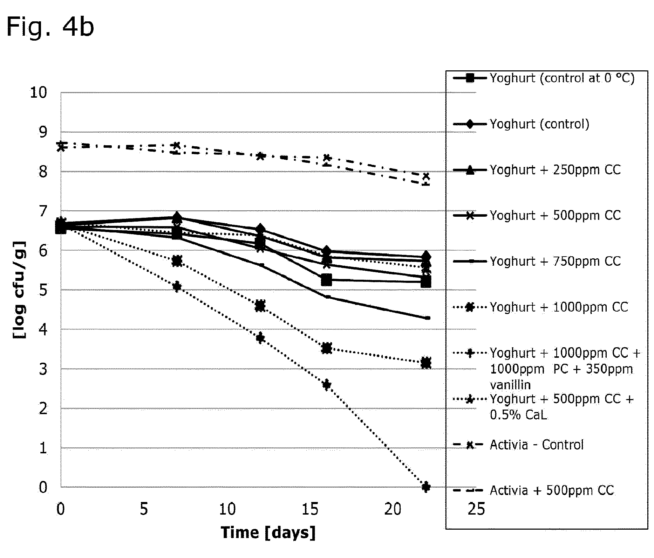

The results are shown in figures 4 (a and b). As can be inferred from these figures, CC effectively inactivates the lactic acid bacteria in yoghurt such that the pH drop during shelf life can be limited. With increasing concentration of CC, the number of viable lactic acid bacteria declined in time. The inactivating effect is increased when CC is combined with PC and vanillin, whereas the addition of CaL leads to a lower pH drop due to its buffering capacity but doesn't lead to less viable lactic acid bacteria.

### Example 4: Shelf life of sausages

Preparation of sausages: The ingredients defined as weight percentages in table 2 were used for the preparation of the sausage. The mixture of Lactate and Acetate Component, LC+AC, was a powder comprising 49.5% sodium lactate and 49.5% sodium acetate (Opti.form powder Ace S50, Corbion Purac), and the Cinnamate Component CC was potassium cinnamate (PuraQ Xtend AX66, Corbion Purac). Vanillin was obtained from Sigma.

**Table 2: Ingredients of sausages for shelf life testing**

| Sample | 1 | 2 | 3 | 4 | 5 |
|---|---|---|---|---|---|
| Preservative ingredients | Referen ce | 1% LC+AC | 0.1% CC | 1% LC+AC 0.1% CC | 1% LC+AC 0.1% CC 0.06% Vanillin |
| Water | 19.62 | 18.62 | 19.52 | 18.52 | 18.46 |
| Salt | 1.67 | 1.67 | 1.67 | 1.67 | 1.67 |
| Sodium nitrite | 0.01 | 0.01 | 0.01 | 0.01 | 0.01 |
| Isolated Soy Protein | 1.50 | 1.50 | 1.50 | 1.50 | 1.50 |
| Sodium-triphosphate | 0.33 | 0.33 | 0.33 | 0.33 | 0.33 |
| Sodium Erythorbate | 0.03 | 0.03 | 0.03 | 0.03 | 0.03 |
| Sugar | 2.05 | 2.05 | 2.05 | 2.05 | 2.05 |
| Tapioca Starch | 3.50 | 3.50 | 3.50 | 3.50 | 3.50 |
| CC | | | 0.10 | 0.10 | 0.10 |
| LC+AC | | 1.00 | | 1.00 | 1.00 |
| Vanillin | | | | | 0.06 |
| Chicken meat with skin | 50.92 | 50.92 | 50.92 | 50.92 | 50.92 |
| Pork belly | 20.37 | 20.37 | 20.37 | 20.37 | 20.37 |

First the meat was shredded, and salt, tri polyphosphate and half of the water was added. After mixing very well, the other ingredients were added. The meat dough was put in a cook crimp bag and vacuum sealed. After sealing the bags were cansned. The sausages were cooked in a cooking cabinet for 105 minutes at 75°C and afterwards cooled down to 8°C. The final sausages were stored at 0°C.

It was observed that no moisture loss from the sausages has taken place during cooking. The pH of the sausages (reference) was 6.6.

Evaluation of shelf life: In a first step an inoculum was prepared as follows. Cultures of lactic acid bacteria (*L. curvatus*, 3x *L. plantarum and L. mesenteroides)* are started from plate and incubated overnight at 30°C in screw-capped tubes (100 x 16 mm) containing 9 ml MRS broth.

Sausages were inoculated to a final level of about 1000 (10³) CFU per g product. The sausage was inoculated with 1% Inoculum (approximately 5ml Inoculum per 500 gram ground meat). The ground sausage was weighed into bag filters, vacuum sealed (Turbovac) and stored at 7°C.

At appropriate time intervals, samples of inoculated ground sausage of each batch are taken in triplicate for microbiological analyses. A bag filter with the sample was opened and 3 times diluted with sterile dilution fluid (8.5 % (w/w) NaCl and 0.1 % (w/v) Cbacteriological peptone). The mix was homogenized for 1 min. in a Stomacher. Additional dilutions were made in sterile dilution fluid as well.

50µl of the homogenate or dilution was subsequently plated on MRS agar using an Eddyjet type 1.23 spiral plater (IUL Instruments, Barcelona, Spain). Plates were incubated for 48 hours at 30°C. The colonies were counted with the Acolyte Supercount automatic colony counter (Synoptics, Cambridge, UK) using the Synoptics software package.

The results of the test are given in Table 3 as the number of days until the plate count number reached a logarithmic value of 7.

Table 3 shows that the compositions according to the invention, prepared using the combination of lactate and cinnamate and where applicable vanillin and/or acetate, controls lactic acid bacteria during at least 17.5 days at 7°C storage temperature. This illustrates the advantageous effects associated with the present invention.

**Table 3: test results**

| **Sample** | **Days till 10⁷ cfu/g** |
|---|---|
| Nr 1: Control | 12.0 |
| Nr 2: 1 % LC+AC | 13.5 |
| Nr 3: 0.1% CC | 14 |
| Nr 4: 1% LC+AC + 0.1% CC | 24.5 |
| Nr 5: 1 % LC+AC + 0.1% CC + 0.06% vanillin | 17.5 |

### Description of the Figures

Fig. 1a: OD measurements after inoculation with *Listeria monocytogenes* (AR1118) - BHI.
Fig. 1b: OD measurements after inoculation with *Leuconostoc mesenteroides* (AR1224) - MRS.
Fig. 1c: OD measurements after inoculation with *Leuconostoc mesenteroides* (AR1225) - MRS.
Fig. 1d: OD measurements after inoculation with *Lactobacillus plantarum* (AR738) - MRS.
Fig. 1e: OD measurements after inoculation with *Candida norvegica* (AR1226) - GPY.
Fig. If: OD measurements after inoculation with *Pichia fermentans* (AR1223) - GPY.
Fig. 1g: OD measurements after inoculation with *Pichia fermentans* (AR1227) - GPY.
Fig. 1h: OD measurements after inoculation with *Yarrowia lipolytica* (AR780) - GPY.
Fig. 1i: OD measurements after inoculation with *Sacharomyces cerevisea* (CBS2190) - GPY.
Fig. 1j: OD measurements for the bioscreen plates after inoculation with *Candida tropicalis* (MUCL28180) - GPY.
Fig. 1k: OD measurements for the bioscreen plates after inoculation with *Listeria monocytogenes* (AR1118) - BHI.
Fig. 1l: OD measurements after inoculation with *Leuconostoc mesenteroides* (AR1224) - MRS.
Fig. 1m: OD measurements after inoculation with *Leuconostoc mesenteroides* (AR1225) - MRS.
Fig. In: OD measurements after inoculation with *Lactobacillus plantarum* (AR738) - MRS.
Fig. 1o: OD measurements after inoculation with *Candida norvegica* (AR1226) - GPY.
Fig. 1p: OD measurements after inoculation with *Pichia fermentans* (AR1223) - GPY.
Fig. 1q: OD measurements after inoculation with *Pichia fermentans* (AR1227) - GPY.
Fig. 1r: OD measurements after inoculation with *Yarrowia lipolytica* (AR780) - GPY.
Fig. 1s: OD measurements after inoculation with *Sacharomyces cerevisea* (CBS2190) - GPY.
Fig. It: OD measurements after inoculation with *Candida tropicalis* (MUCL28180) - GPY.

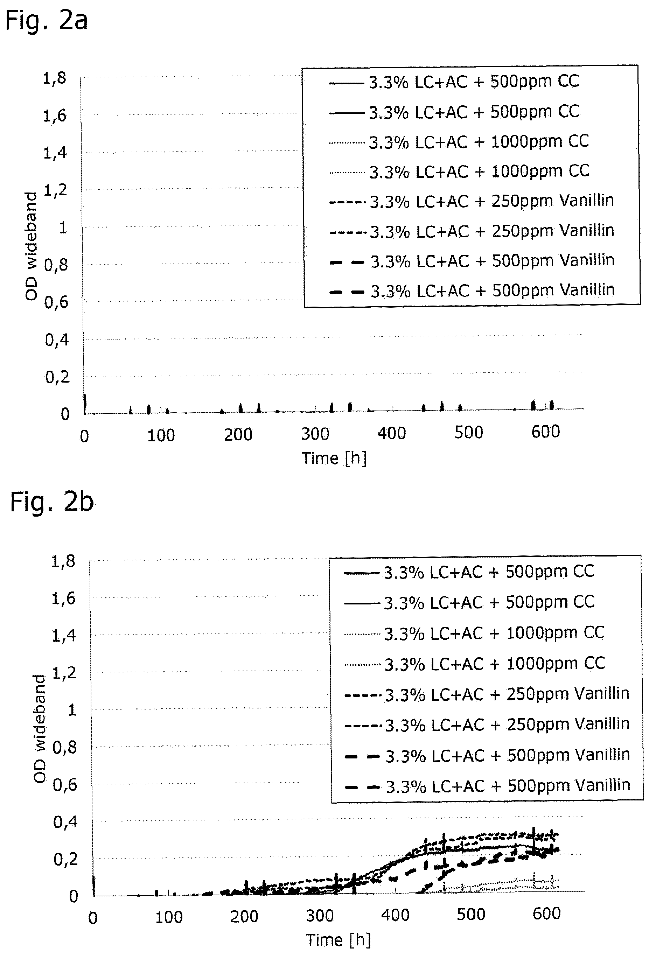

Fig. 2a: OD measurements after inoculation with *Listeria monocytogenes* (AR1118) - BHI.
Fig. 2b: OD measurements after inoculation with *Leuconostoc mesenteroides* (AR1224) - MRS.

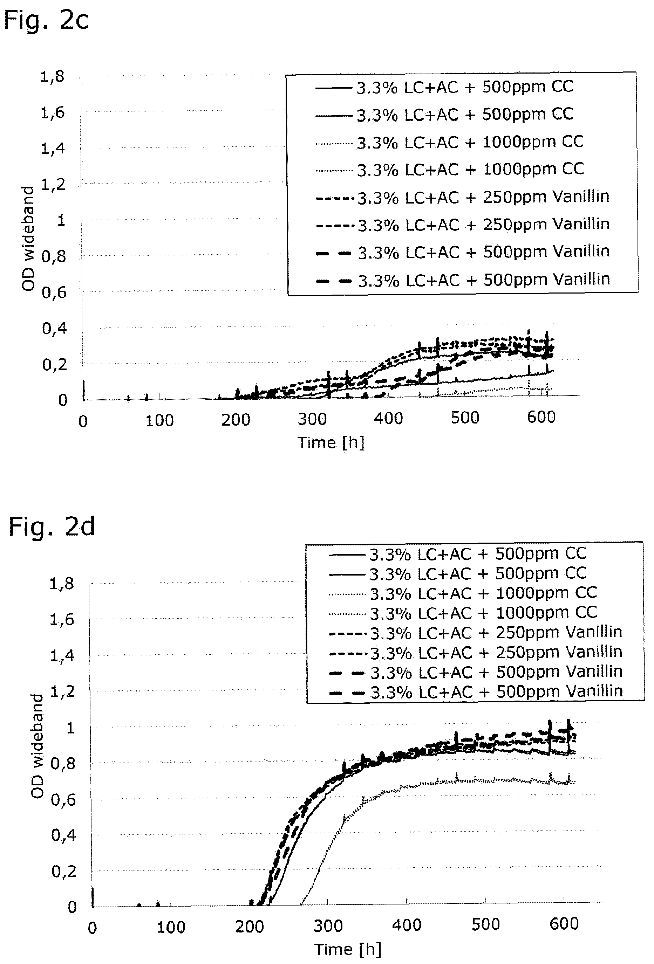

Fig. 2c: OD measurements after inoculation with *Leuconostoc mesenteroides* (AR1225) - MRS.
Fig. 2d: OD measurements after inoculation with *Lactobacillus plantarum* (AR738) - MRS.

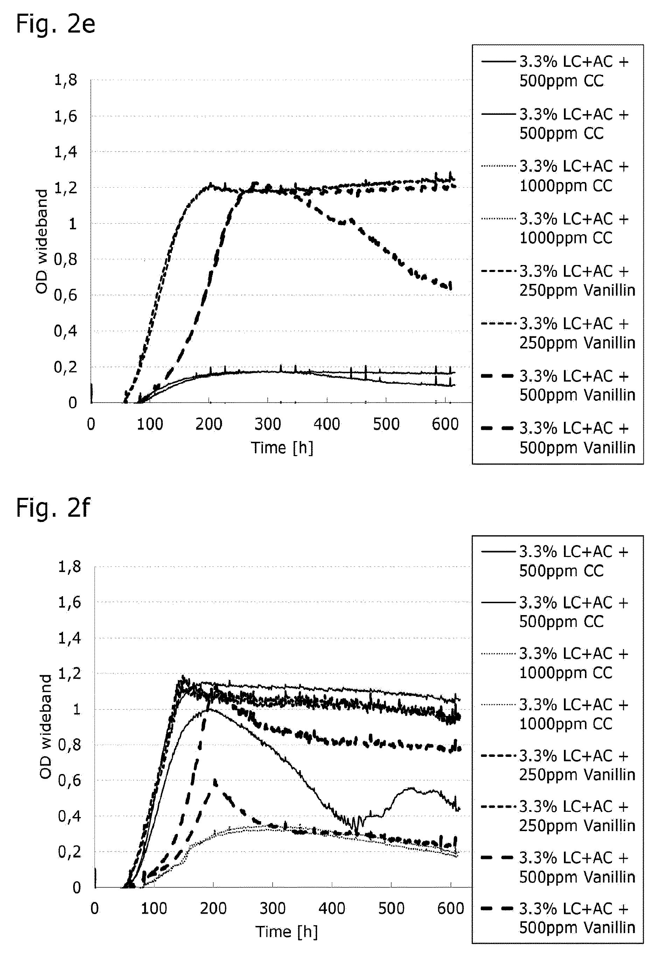

Fig. 2e: OD measurements after inoculation with *Candida norvegica* (AR1226) - GPY.
Fig. 2f: OD measurements after inoculation with *Pichia fermentans* (AR1223) - GPY.

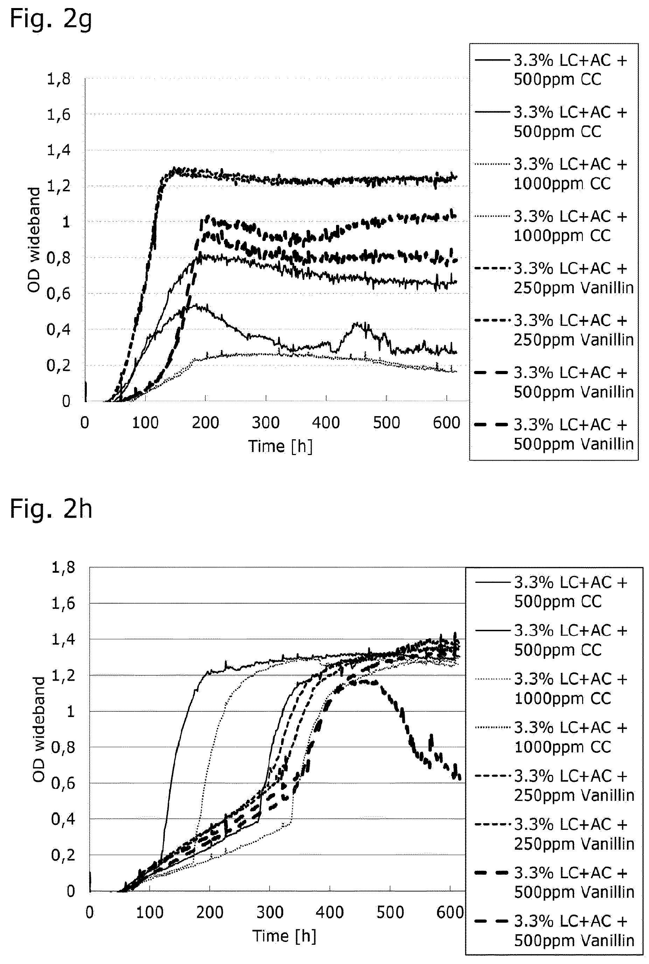

Fig. 2g: OD measurements after inoculation with *Pichia fermentans* (AR1227) - GPY.
Fig. 2h: OD measurements after inoculation with *Yarrowia lipolytica* (AR780) - GPY.

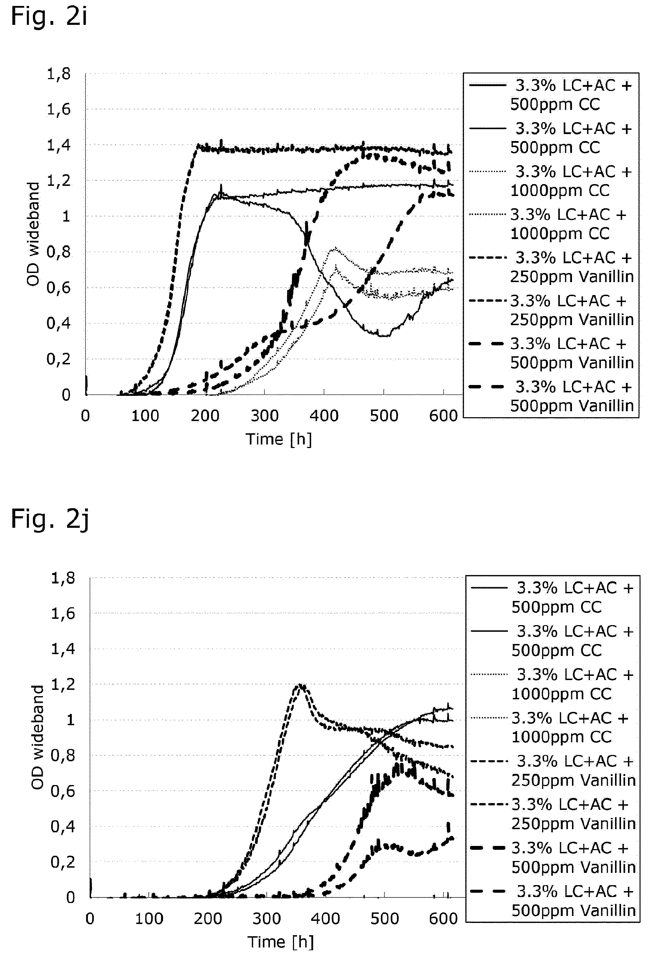

Fig. 2i: OD measurements after inoculation with *Sacharomyces cerevisea* (CBS2190) - GPY.
Fig. 2j: OD measurements after inoculation with *Candida tropicalis* (MUCL28180) - GPY.

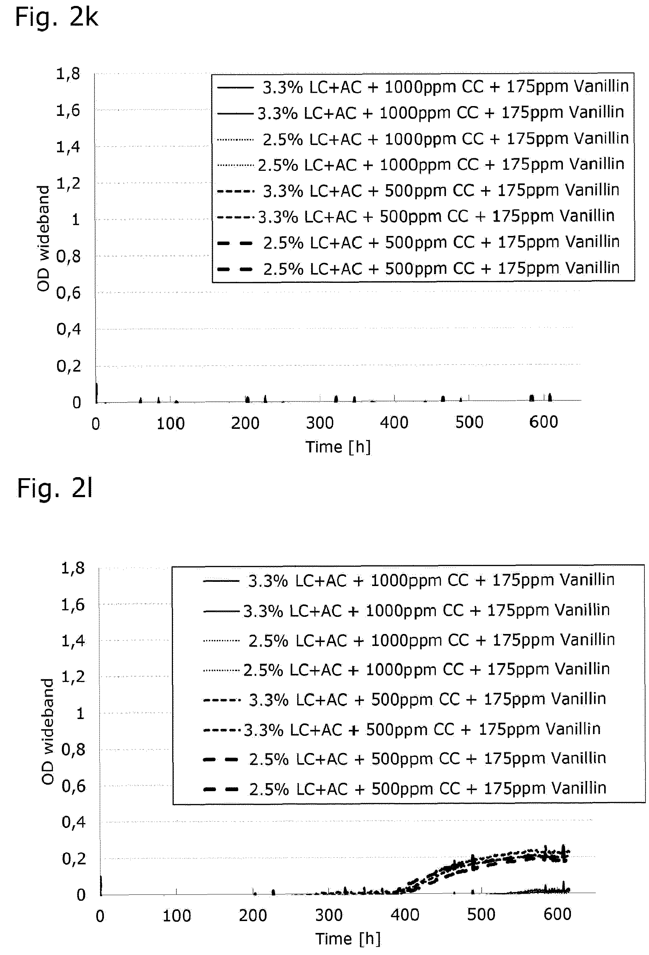

Fig. 2k: OD measurements after inoculation with *Listeria monocytogenes* (AR1118) - BHI.
Fig. 2l: OD measurements after inoculation with *Leuconostoc mesenteroides* (AR1224) - MRS.

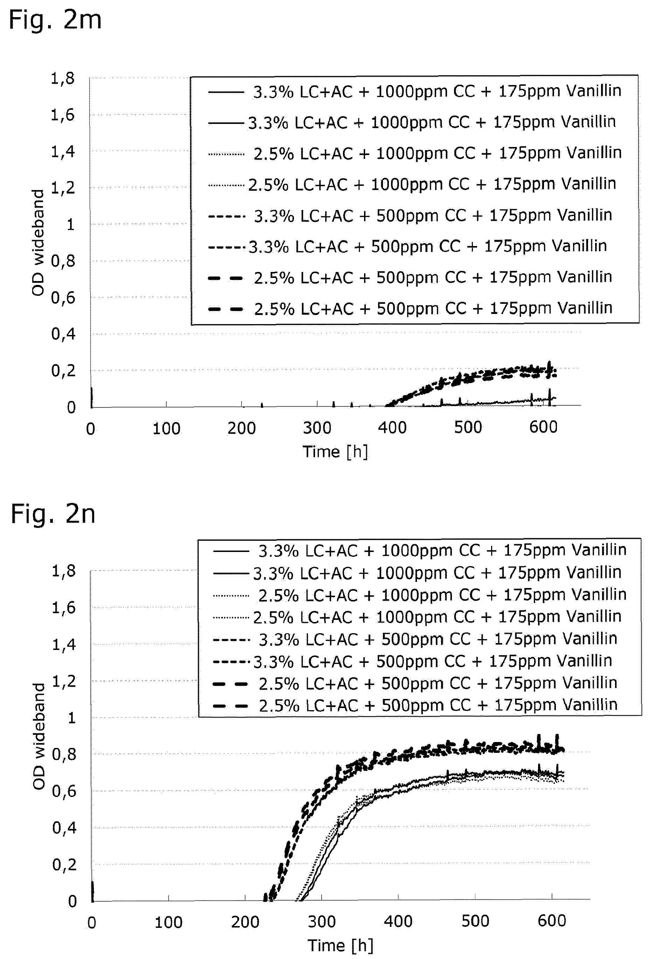

Fig. 2m: OD measurements after inoculation with *Leuconostoc mesenteroides* (AR1225) - MRS.
Fig. 2n: OD measurements after inoculation with *Lactobacillus plantarum* (AR738) - MRS.

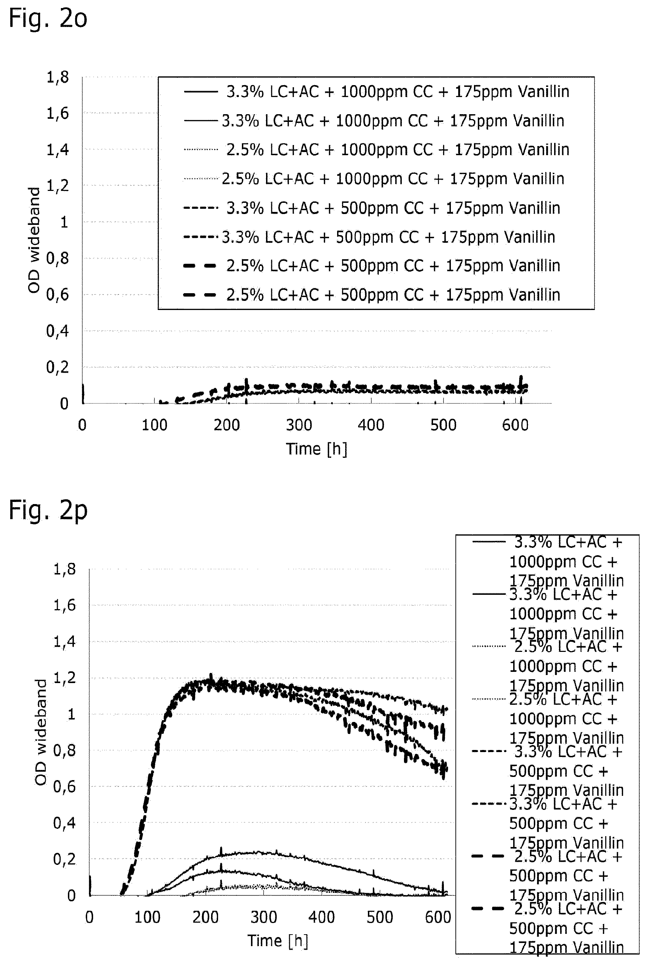

Fig. 2o: OD measurements after inoculation with *Candida norvegica* (AR1226) - GPY.
Fig. 2p: OD measurements after inoculation with *Pichia fermentans* (AR1223) - GPY.

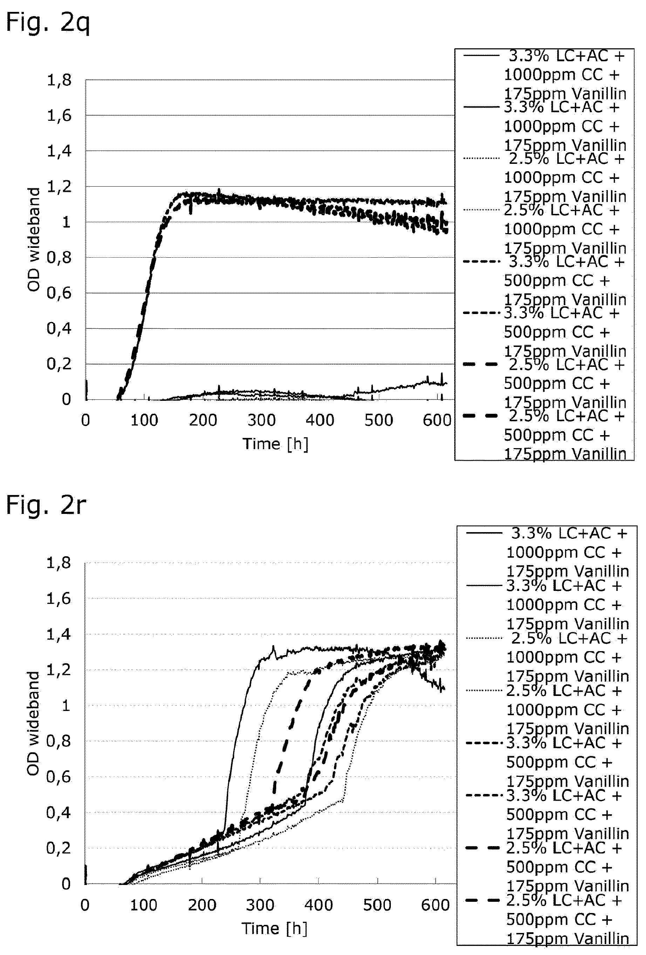

Fig. 2q: OD measurements after inoculation with *Pichia fermentans* (AR1227) - GPY.
Fig. 2r: OD measurements after inoculation with *Yarrowia lipolytica* (AR780) - GPY.

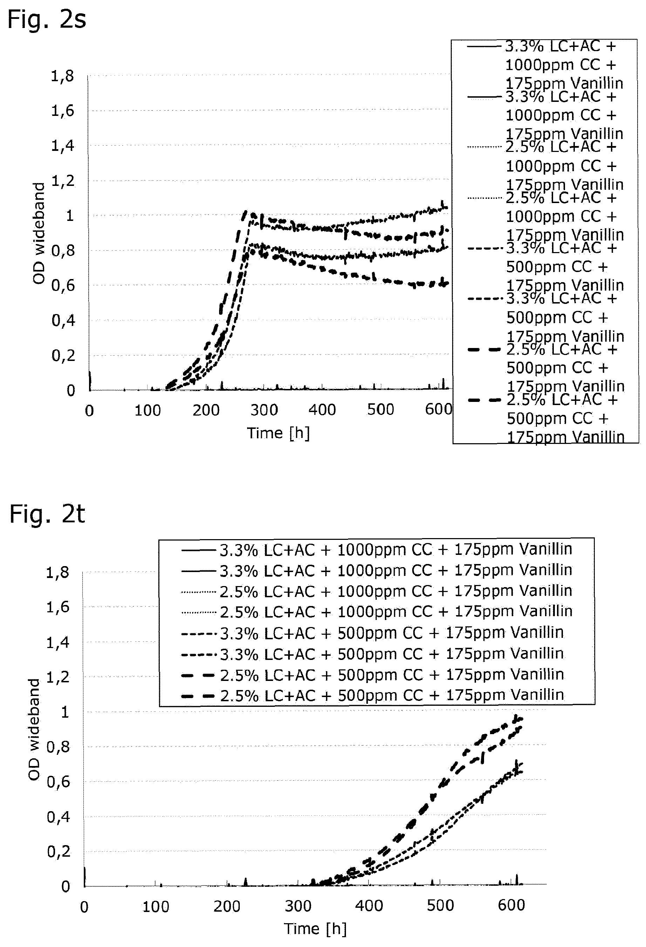

Fig. 2s: OD measurements after inoculation with *Sacharomyces cerevisea* (CBS2190) - GPY.
Fig. 2t: OD measurements after inoculation with *Candida tropicalis* (MUCL28180) - GPY.
Fig. 3a: growth of *Leuconostoc mesenteroides* measured by means of colony counts on MRS. (Oxoid, CM0361) agar plates.
Fig. 3a: growth of *Leuconostoc mesenteroides* measured by means of colony counts on TSA. (Oxoid, CM0131) agar plates.
Fig. 4a: pH development.
Fig. 4b: lactic acid bacteria counts.

## Claims

1. A preservative system comprising:
• a cinnamate component selected from cinnamic acid, salts of cinnamic acid and combinations thereof;
• a lactate component selected from lactic acid, salts of lactic acid and combinations thereof;
wherein the cinnamate component (CC) and the lactate component (LC) are present in a molar ratio of LC:CC within the range of 0.5-250.

2. Preservative system according to claim 1, in the form of a composition that contains at least 0.5 wt. % of the cinnamate component by weight of the dry matter contained in the preservative composition.

3. Preservative system according to claim 1 or 2, in the form of a composition comprising at least 1.5 wt.% by weight of the dry matter contained in the preservative system of the combination of cinnamate component and lactate component.

4. Preservative system according to any one of the preceding claims, additionally comprising an alkanoate component selected from acetic acid, propionic acid, salts of acetic acid, salts of propionic acid and combinations thereof; wherein the cinnamate component (CC) and the alkanoate (ALC) component are present in a molar ratio of ALC:CC within the range of 0.5-250.

5. Preservative system according to claim 4, wherein the alkanoate component is selected from acetic acid, salts of acetic acid and combinations thereof.

6. A method of preparing an edible product, said method comprising introducing into the edible product:
• a cinnamate component selected from cinnamic acid, salts of cinnamic acid and combinations thereof;
• a lactate component selected from lactic acid, salts of lactic acid and combinations thereof;
so as to produce an edible product wherein the cinnamate component (CC) and the lactate component (LC) are present in a molar ratio of LC:CC within the range of 0.5-250.

7. Method according to claim 6, wherein the method comprises adding a preservative composition comprising the cinnamate component and the lactate component.

8. Method according to claim 7, wherein the method comprises adding the preservative composition in an amount of 0.25-5 % by weight of the edible product.

9. Method according to any one of claims 6-8, wherein the method comprises adding the cinnamate component at a level of at least 50 mg per kg of the edible product.

10. Method according to any one of claims 6-9, wherein the edible product is a farinaceous product containing at least 20% flour by weight of the dry matter.

11. Method according to any one of claims 6-9, wherein the edible product is a dairy product.

12. Method according to claim 11, wherein the dairy product is a fermented product.

13. Use of a preservative system according to any one of claims 1-5 for the preservation of an edible product.

14. A method of manufacturing a fermented edible product, said method comprising fermenting an aqueous substrate using lactic acid bacteria to produce a fermented substrate, and adding a cinnamate component to the fermented substrate to inactivate lactic acid bacteria, said cinnamate component being selected from cinnamic acid, salts of cinnamic acid and combinations thereof.
